# EUROPEAN PATENT APPLICATION

(11) **EP 0 844 139 A2**
(43) Date of publication of application: **27.05.1998**
(21) Application number: 97309384.2
(22) Date of filing: 20.11.1997
(51) Int. Cl.: B60R 13/08

(54) **Arrangements for reducing external noise from motor vehicles**

(30) Priority: 20.11.1996 GB 9624123; 05.03.1997 GB 9704548; 13.03.1997 GB 9705244
(71) Applicant: DRAFTEX INDUSTRIES LIMITED, Edinburgh EH2 3AP, Scotland (GB)
(72) Inventor: Gallas, Gérard, 44300 Nantes (FR)
(74) Representative: Foster, David Martyn

(57) **Abstract**

An arrangement for reducing noise radiated externally from motor vehicles comprises two acoustic screen parts (40, 42) made of material having a high acoustic impedance which are mounted together in generally co-planar fashion, and with edges overlapping, between the engine compartment of the vehicle and a front wheel thereof. The overlapping edges define slots (44, 46, 48, 50) which form apertures when the screens (40, 42) are mounted in overlapping relationship, the apertures allowing passage of members extending between the engine compartment and the wheel. Such members may include longitudinally movable members such as a steering link or rotatable members such as the drive shaft. The slots (44, 46, 48, 50) carry respective half-bellows (52, 54, 56, 58) which, in the assembled arrangement, come together to define bellows embracing the movable members and are clipped together. These bellows thus restrict the radiation of noise outwards from the engine compartment but also allow the necessary movement of the movable members to take place. The screens and the bellows may be made of rubber or thermoplastics material and may be moulded together.

## Description

The invention relates to a noise-reduction arrangement for the engine of a motor vehicle, comprising material having a high acoustic impedance for mounting adjacent the engine compartment, the material having an aperture for receiving a movable member extending from the engine compartment, the aperture having associated with it means for flexibly and acoustically sealing around the member.

Such arrangement is shown in DE-A-4 007 938. This arrangement is in the form of a capsule for acoustically sealing around the engine of the vehicle and has an aperture through which outwardly extends the cooling fan mounted on and driven by the engine. The acoustic material supports a flexible diaphragm extending around the aperture for flexibly sealing with the housing of the cooling fan. However, encapsulating an engine in this way increases the cooling requirements for the engine. The invention in one of its aspects aims to deal with this problem.

According to this aspect of the invention, the arrangement as first set forth above is characterised in that the member is a member linked to a wheel of the vehicle and the material is adapted to be mounted in position between the engine compartment and the wheel.

The arrangement as first set forth above is also difficult to install around the engine. The invention in its second and third aspects aims to deal with this problem.

According to the second aspect of the invention, the arrangement as first set forth above is characterised in that the member is a member linked to a road wheel of the vehicle, the material comprises two separate sheet-like screens, each of predetermined shape and for mounting in substantially co-planar fashion between the engine compartment and the inside face of the road wheel of the vehicle with adjacent edges of the screens overlapping each other, the overlapping edges being formed with respective slots for defining an aperture for receiving the member when the two screens are mounted in the said position, and the closed ends of the slots defining the aperture carrying respective acoustic sealing means which are brought together to provide an acoustic seal around the member when the screens are mounted in the said position.

According to the third aspect of the invention, the arrangement as first set forth above is characterised in that the member is a member linked to a road wheel and the material comprises a sheet-like screen of predetermined shape and for mounting in position between the engine compartment and the inside face of the road wheel, the screen having a slit or opening extending from an edge of the screen to intersect with the aperture to enable the material to be temporarily bent apart alongside the slit or opening to enable entry of the member, the acoustic sealing means being temporarily openable to receive the member from the opened-out slit or opening, the acoustic sealing means thereafter closing around the surface of the member.

Noise reduction arrangements embodying the invention, and for use in reducing noise radiated by the engines of motor vehicles, will now be described, by way of example only, with reference to the accompanying diagrammatic drawings in which:
Figure 1 is a perspective view of part of the front wheel drive transmission, suspension and steering mechanism of a motor vehicle;
Figure 2 is a side elevation corresponding generally to Figure 1 and showing where an acoustic screen forming part of one of the arrangements may be mounted;
Figure 3 is a perspective view of a half-bellows forming part of one of the arrangements;
Figure 4 corresponds to Figure 3 but also shows the other half of the bellows;
Figure 5 is a perspective view showing how the two half-bellows of Figure 4 may be clipped together;
Figure 6 shows the upper and lower parts of the acoustic screen each carrying two half-bellows and ready for assembly together;
Figure 7 shows a modified form which the acoustic screen of Figure 6 can have;
Figure 8 shows a modified form of the acoustic screen of Figure 7;
Figure 9 is a diagrammatic cross-section on the line IX-IX of Figure 8; and
Figure 10 shows a modified form of the acoustic screen parts shown in Figure 6.

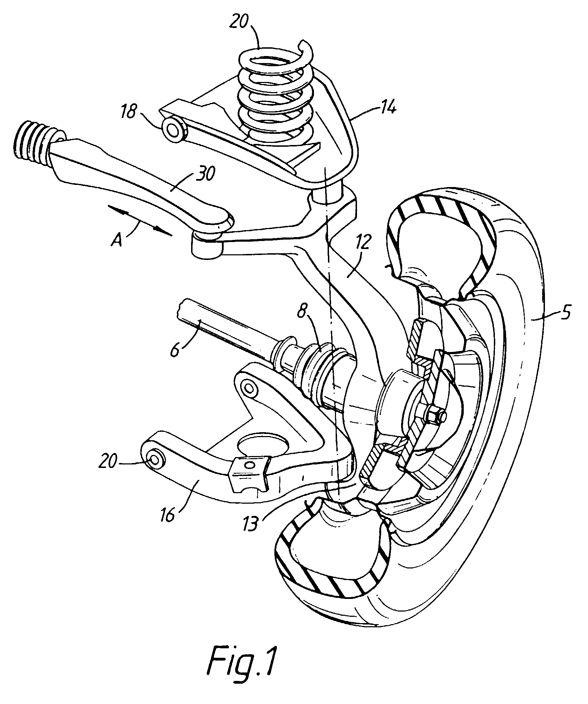

Figures 1 and 2 show one of the front, driving, wheels 5 of a motor vehicle, the wheel 5 being driven by the drive shaft 6 from the vehicle engine (not shown) via its gearbox and differential 7 (Fig. 2). The drive shaft is coupled to the wheel 5 by means of a universal joint protected by a flexible bellows 8. The wheel 5 is rotatably supported by bearings 10 (Figure 2) carried by the upper and lower suspension arms 12 and 13 which are pivotally linked to upper and lower wishbones 14 and 16. The wishbones 14, 16 are pivotable about horizontal axes 18, 20 supported by the vehicle body or chassis and the vehicle suspension is carried out by means of a coil spring 22 (Figure 1). Figure 2 omits the spring but shows the shock absorber 24 which acts between the lower wishbone 16 and part of the vehicle body 26. The upper and lower suspension arms 12 and 13 are pivotable on the wishbones 14 and 16 about pivots having a common axis 28 (Fig. 2) slightly inclined to the vertical. A steering arm 30 (Figure 1) is linked to the upper suspension link 12 and moves in the direction of the arrows A in order to turn the suspension arms 12, 13 about the pivot axis 28 and thus to turn the wheel 5 correspondingly for steering purposes.

A substantial amount of noise from the vehicle engine, and the associated transmission parts, will be emitted sideways from the engine compartment towards the wheel 5 (and, correspondingly, on the other side of the vehicle). The noise-reduction arrangement now to be described in more detail below, provides an acoustic screening arrangement for blocking a substantial part of this noise and preventing or reducing its outward radiation through the wheel arch and around the wheel.

The acoustic screening arrangement 38 is shown diagrammatically in Figure 2 and provides a wall extending across the interior of the wheel arch of the vehicle. It has to provide through passages to accommodate the linear movement (in the direction of the arrows A) of the steering arm 30 and the rotary movement of the half-shaft 6, but at the same time providing a reasonable acoustic seal around these movable parts. In order to carry out this purpose, the screen which is shown in more detail in Figure 6 is therefore formed in upper and lower parts 40 and 42 provided with matching slots 44, 46 and 48, 50, the slots 44 and 46 accommodating the steering arm 30 and the slot 48 and 50 accommodating the half-shaft 6. The closed end of each slot 44, 46, 48 and 50 carries an attached half-bellows, as shown at 52, 54, 56 and 58. When the two screen parts 40, 42 are brought together substantially co-planarly with their slotted edges overlapping, in a manner to be explained in more detail, the half-bellows 52 and 54, and the half-bellows 56 and 58, are brought together to form a seal around the steering arm 30 and the half-shaft 6.

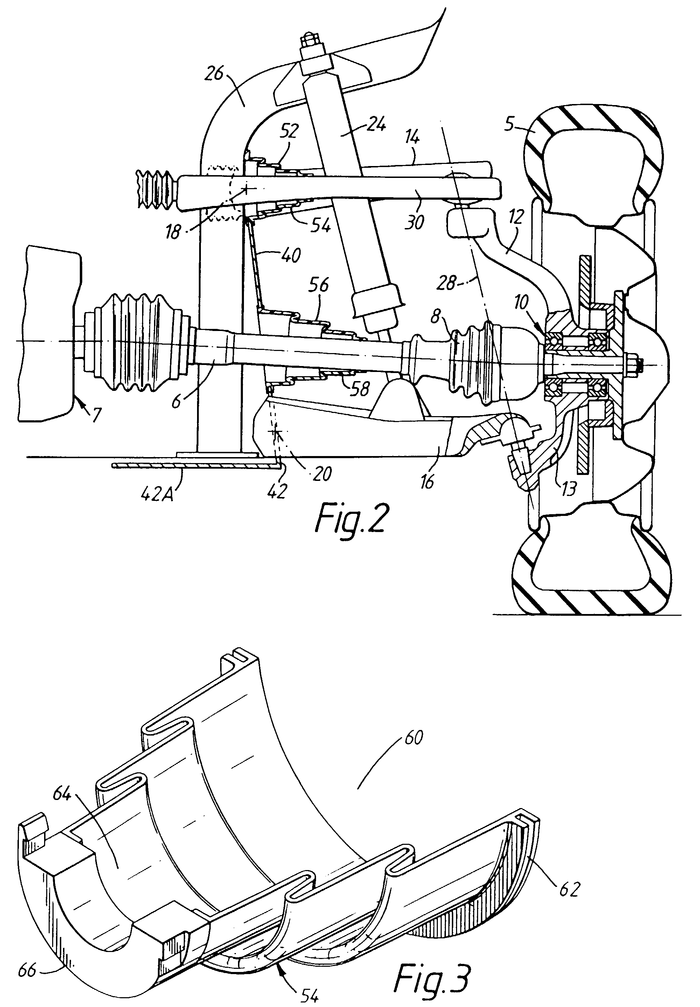

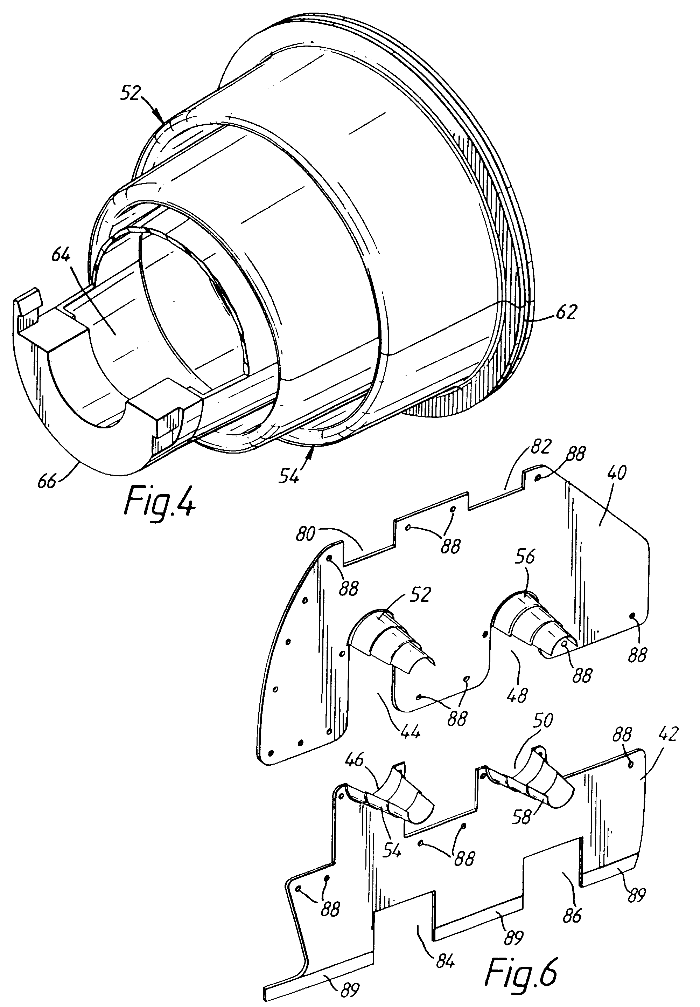

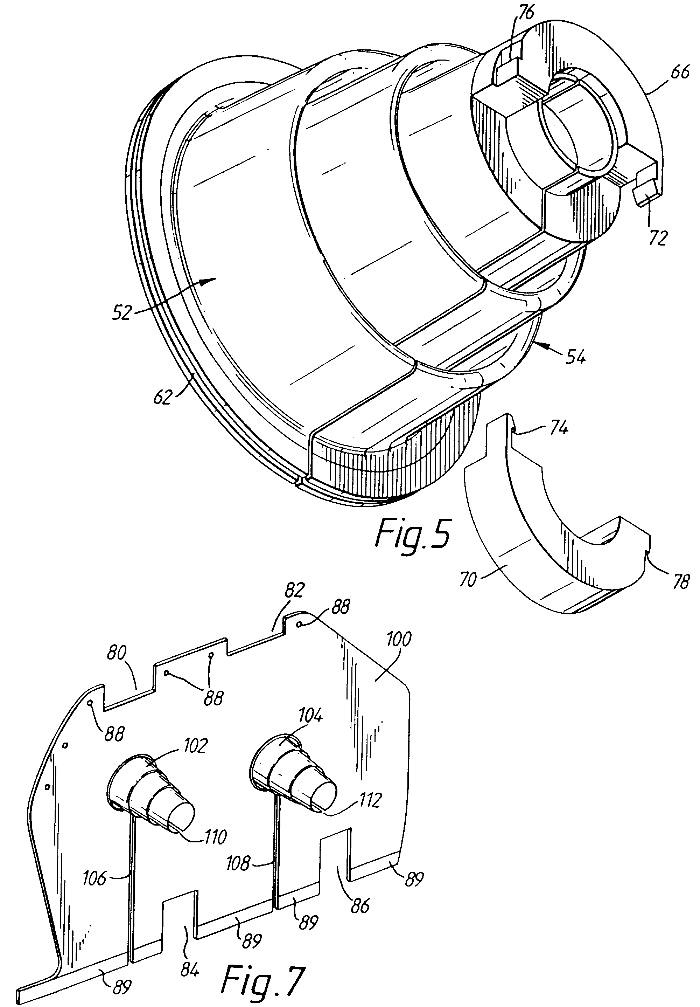

One of the half-bellows (e.g. the half-bellows 54) is shown in Figure 3. It has a wide end 60 provided with a groove 62 by means of which it may be secured to the respective screen part 40, 42, around the edge of the end of the respective slot 44, 46, 48 or 50. From the wide end 60, flexible pleated material extends to a narrow end 64 provided with a semi-circular clip 66. Figure 4 shows the corresponding upper half-bellows (e.g. the half-bellows 52). This is of matching construction and mates with the lower half-bellows as shown in Figure 5. In Figure 4, the narrow end of the upper bellows part is omitted to show its construction. Figure 5 shows how the clip 66 (Figure 2) and a corresponding clip 70 may be used and inter-engaged to hold the two half-bellows together, each clip having a locking part 72, 74 for engaging a shoulder 76, 78.

In operation, the two screen parts 40, 42 (Figure 6) are separately placed into position, from above and below the suspension of the vehicle wheel 5 (Figures 1 and 2), and then brought vertically together so that the half-bellows 52, 54 come together around the steering arm 30 and the half-bellows 56 and 58 come together around the half-shaft 6. When the half-bellows pairs have properly inter-engaged, they are secured together by means of the clips 66 and 70 as shown in Figure 5.

The screen parts 40, 42 are also provided with further slots 80, 82, 84 and 86 (see Figure 6) which, when the screen parts 40, 42 are brought together, form apertures for receiving, the suspension linkage. It will be noted from Figure 2 that the screening arrangement is preferably mounted so as to be aligned with the pivot points 18, 20 of the wishbones 14, 16 so that it does not have to accommodate wishbone movement. Other apertures may be provided for connections such as hydraulic pipes.

Figure 6 also shows holes 88 in the screen parts 40, 42 for receiving suitable fixtures either for fixing the two screen parts together when they are mounted in overlapping relationship or for fixing the screen parts, to the adjacent body work. In addition, the lower screen part 42 may be provided with rigid members 89 extending along its lower edge for strengthening it where it crosses the wheel arch opening.

The screen parts 40, 42, and the half-bellows 52, 54, 56 and 58 are made of material having good sound-deadening characteristics - and also, of course, having suitable mechanical characteristics and the ability to withstand heat, cold and water and all other environmental effects likely to be encountered. The screen parts 40, 42 can be made in rigid or semi-rigid material, such as steel or plastics material, covered on at least the inside with sound-absorbing material, such as flexible or rigid foam. Instead of rigid material for the body of the screen parts, a more flexible material can be used if it can be given the required mechanical characteristics, obtained for example by sufficient density or thickness; rubber or thermoplastics material may be possible. Recyclable materials can also be used if they can meet the required characteristics. The half-bellows 52, 54, 56 and 58 can be made from a suitable flexible elastomer or thermoplastic material. Advantageously, they can be covered on their internal faces with a sound-absorbing material such as foamed or cellular plastics material. The thickness of the absorbent material must not be so great as to limit the flexibility of the bellows to an undesirable extent.

The half-bellows 52, 54, 56 and 58 can be joined to the screen parts 40,42 in any suitable way, such as by clipping or adhesive.

Advantageously, however, they can be integrally moulded with the material of the screen parts.

It will be understood that the exact shape of the screen parts 40, 42 and the position, number and size of the half-bellows 52, 54, 56 and 58 will depend on the layout of the transmission and suspension of the vehicle. In the case where the rear wheels of the vehicle, rather than its front wheels, are driven, the construction of the acoustic screening system will be simplified.

Fig. 2 shows how the lower screen part 42 can have an extension 42A extending horizontally under the drive shaft 6.

Figure 7 shows a modified form of the acoustic screening arrangement. Parts corresponding to parts in other Figures are similarly referenced. In the arrangement of Figure 7, the acoustic screen is not in two parts (as shown in Figure 6) but is a single part 100. In addition, each bellows is in the form of a single bellows 102, 104 instead of being in the form of two bellows halves (as shown in Figure 6). In order to enable the screen 100 to be mounted in position, it is provided with two slits 106, 108, each of which extends from the lower edge of the screen 100 up to and through the wall of a respective one of the bellows 102, 104. Each bellows 102, 104 is provided with a longitudinally extending through slit 110, 112 communicating with the respective slit 106, 108. The slits 106 and 108 enable the screen to be fitted in position on the vehicle, the material of the screen on each side of the slits 106, 108 being bent apart to enable the screen to be placed in position over the steering arm 30 and the half-shaft 6. In addition the extension of each slit 106, 108 through the wall of a respective one of the bellows enables each bellows to be opened out to embrace the steering arm or the half-shaft, as the case may be, the bellows then resiling around these members. If desired, clips may be provided to mould each slit 106, 108 firmly closed after assembly on the vehicle in this way.

The screen 100 and the bellows 102, 104 may be made of the same material as for the screen parts and the half-bellows of Figure 6.

The screen 100 of Figure 7 may of course be modified to suit the layout of a particular vehicle. Additional slits may be provided to accommodate other parts of the vehicle such as hydraulic pipes and the like.

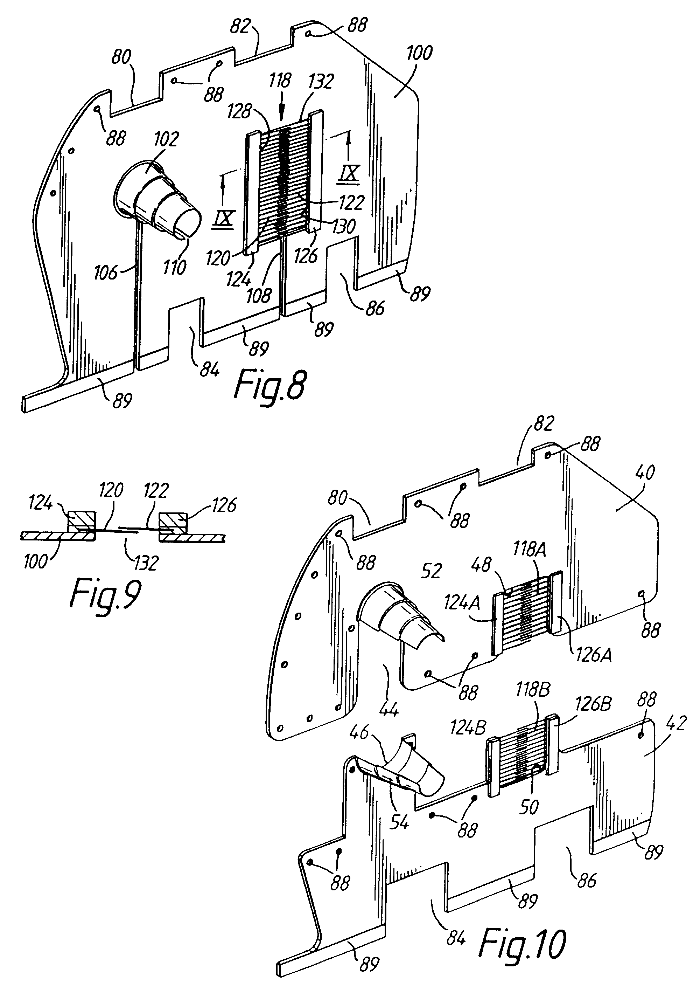

In the modified screen shown in Figure 8, parts corresponding to those in Figure 7 are similarly referenced.

In the acoustic screen of Figure 8, the bellows 104 is replaced by an arrangement of flexible fibres indicated generally at 118. There are two sets 120 and 122 of the fibres 118 which are secured by respective supports 124 and 126 (see Figure 9) running along opposite longitudinal sides 128 and 130 of a rectangular aperture 132 in the screen 100. The aperture 132 is connected to and open to the slot 108. During the mounting process, the material of the screen on each side of the slit 108 is bent apart, thus tending to splay the sides 128 and 130 of the aperture 132 apart, to allow entry of the half-shaft 6. The separated parts of the screen 100 then come together again and the fibres 118 assure acoustic sealing around the relevant member 30 or 6. During the mounting process, of course, the slit 106 and the bellows 110 are also opened out in the manner already explained.

The flexible fibres 118 are made of suitable material so as not to cause abrasion of the half-shaft. The material of the fibres must also be such that it retains good flexibility during the whole of the working life of the screen.

The fibres can be attached in position in any suitable way and not merely by means of the supports 124 and 126. For example, they can be secured by clipping or adhesive or by moulding or over-moulding. Clearly, the bellows 102 could also be replaced by fibres similar to the fibres 118.

Figure 10 shows a modified form of the acoustic screen parts of Figure 6, in which the upper and lower bellows parts 56,58 are replaced by upper and lower arrangements of fibres 118A and 118B. These fibres, which may be of the same type as shown in Figures 8 and 9 and secured in position by any suitable means such as by supports 124A, 124B, 126A, 126B as explained in connection with those Figures, come together to form an acoustic seal around the half-shaft 6 when the two screen parts 40, 42 are attached together in the manner explained in connection with Figure 6.

## Claims

1. A noise-reduction arrangement for the engine of a motor vehicle, comprising material (40, 42; 100) having a high acoustic impedance for mounting adjacent the engine compartment, the material (40, 42; 100) having an aperture (44, 50; 102, 104) for receiving a movable member (6, 30) extending from the engine compartment, the aperture having associated with it means (52-58; 102, 104; 118A, 118B) for flexibly and acoustically sealing around the member (6, 30), characterised in that the member is a member (6, 30) linked to a wheel (5) of the vehicle and the material (40, 42; 100) is adapted to be mounted in position between the engine compartment and the wheel (5).

2. An arrangement according to claim 1, characterised in that the means for flexibly and acoustically sealing around the member comprises bellows means (52-58; 102, 104).

3. An arrangement according to claim 2, characterised in that the bellows means comprises a bellows (52-58) separated along a longitudinal plane into two parts which are brought together to define the bellows when the sheet-like material (40, 42) is mounted in the said position.

4. An arrangement according to claim 1, characterised in that the means for flexibly and acoustically sealing around the member comprises a set of flexible members (118; 118A, 118B) extending partway across the aperture (48, 50, 132) from the edge thereof and having free ends.

5. An arrangement according to any preceding claim, characterised in that the sheet-like material is in a plurality of parts (40, 42).

6. An arrangement according to claim 1, characterised in that the sheet-like material is in two parts (40, 42) and the aperture is defined by respective slots (44-50) in edges of the two parts (40, 42) of the material which are brought overlappingly together when the material is mounted in the said position.

7. An arrangement according to claim 6, characterised in that the means for flexibly and acoustically sealing around the member comprises bellows formed by two bellows parts (52, 54; 56, 58) separated along a longitudinal plane through the bellows, one bellows part (52, 56) being attached to one part (40) of the material and the other bellows part (54, 58) being attached to the other part (42) of the material, the two bellows parts (52, 54; 56, 58) being mated together when the material is mounted in the said position.

8. An arrangement according to claim 7, characterised by fastening means (72, 78) for attaching the two bellows parts (52, 54; 56, 58) together.

9. An arrangement according to claim 6, characterised in that the means for flexibly and acoustically sealing around the member (6, 30) comprises two sets (118A, 118B) of flexible members, the flexible members of each set (118A, 118B) extending partway across a respective one of the slots (48, 50) from the opposite parts of the boundary thereof and having free ends at least some of which contact the surface of the member (6, 30) when the material is mounted in the said position.

10. An arrangement according to claim 1, characterised in that the aperture is connected to an edge of the sheet-like material (100) by a slit or opening (106, 108) in and through the material whereby the material along opposite sides of the slit or opening (106, 108) may be bent apart to allow entry of the member (6, 30) into the aperture, the material adjacent the slit or opening (106, 108) then resiling.

11. An arrangement according to claim 10, characterised in that the means for flexibly and acoustically sealing around the member comprises a bellows (102, 104), the wall of which is cut through along a line (110, 112) extending longitudinally of the bellows, the line (110, 112) intersecting with the slit or opening (106, 108) to enable the bellows to be opened out along the line to allow entry of the member (6, 30) into the bellows (102, 104) when the material along opposite sides of the slit or opening (106, 108) is bent apart, the material of the bellows thereafter resiling.

12. An arrangement according to claim 11, characterised in that the means for flexibly and acoustically sealing around the member comprises a set of flexible members (118) extending part way across the aperture (132) from opposite edges thereof and having free ends at least some of which contact the surface of the member (6, 30) when the material is mounted in the said position.

13. An arrangement according to any one of claims 10 to 12, characterised by clip means for securing together the material along opposite sides of the slit.

14. An arrangement according to any preceding claim, characterised in that the member linked to the wheel (5) is a longitudinally movable steering link (30) for adjusting the steering angle of the wheel (5).

15. An arrangement according to any preceding claim, characterised in that the member linked to the wheel (5) is a rotatable drive shaft (6) for the wheel.

16. An arrangement according to any preceding claim, characterised in that the sheet-like material (40, 42; 100) and the means (52-58; 102, 104) for flexibly and acoustically sealing around the member (6, 30) are moulded together.

17. An arrangement according to any preceding claim, characterised in that the sheet-like material (40, 42; 100) and the means (52-58; 102, 104, 118) for flexibly and acoustically sealing around the member (6, 30) are made of rubber or thermoplastics material.

18. An arrangement according to claim 17, characterised by acoustic damping material attached to the rubber or thermoplastics material.

19. An arrangement for reducing external noise from a motor vehicle, comprising material (40, 42) having a high acoustic impedance to be mounted in a position adjacent the engine compartment of the vehicle, and a movable member (6, 30), the material (40, 42) having an aperture (44-50) for receiving a movable member (6, 30) extending from the engine compartment, the aperture (44-50) having means (52-58; 118A, 118B) associated with it for flexibly and acoustically sealing around the member (6, 30), characterised in that the member (6, 30) is a member linked to a road wheel (5) of the vehicle, the material comprises two separate sheet-like screens (40, 42), each of predetermined shape and for mounting in substantially co-planar fashion between the engine compartment and the inside face of the road wheel (5) of the vehicle with adjacent edges of the screens (40, 42) overlapping each other, the overlapping edges being formed with respective slots (44, 48; 46, 50) for defining an aperture for receiving the member (6, 30) when the two screens (40, 42) are mounted in the said position, and the closed ends of the slots (44, 48; 46, 50) defining the aperture carrying respective acoustic sealing means (52-58; 118A, 118B) which are brought together to provide an acoustic seal around the member (6, 30) when the screens (40, 42) are mounted in the said position.

20. An arrangement according to claim 19, characterised in that the acoustic sealing means comprises respective part-tubular bellows parts (52-58) extending transversely to the plane of the respective screens (40, 42) so as to be brought together to define a bellows embracing the movable member (6, 30) when the screens (40, 42) are mounted in the said position.

21. An arrangement according to claim 20, characterised by fastening means (72-78) for fastening the two bellows parts (52-58) together.

22. An arrangement according to claim 21 or 22, characterised in that the bellows is of frusto-conical shape and the larger-sized end of each bellows part (52-58) is attached to the respective screen (40, 42).

23. An arrangement according to any one of claims 20 to 22, characterised in that each bellows part (52-58) is integrally moulded with the respective screen (40, 42).

24. An arrangement according to claim 19, characterised in that the acoustic sealing means comprises two sets of flexible members (118A, 118B), the flexible members of each set extending partway across a respective one of the slots (48, 50) from the opposite parts (124A, 124B, 126A, 126B) of the boundary thereof and having free ends at least some of which contact the surface of the member (6, 30) linked to the wheel when the material is mounted in the said position.

25. An arrangement for reducing external noise from a motor vehicle, comprising material (100) having a high acoustic impedance for mounting adjacent the engine compartment, the material (100) having an aperture (102, 104) for receiving a movable member (6, 30) extending from the engine compartment, the aperture (102, 104) having acoustic sealing means (102, 104, 118) associated with it for flexibly and acoustically sealing around the member (6, 30), characterised in that the member is a member (6, 30) linked to a road wheel (5) and the material comprises a sheet-like screen (100) of predetermined shape and for mounting in position between the engine compartment and the inside face of the road wheel (5), the screen (100) having a slit or opening (106, 108) extending from an edge of the screen (100) to intersect with the aperture (102, 104, 132) to enable the material to be temporarily bent apart alongside the slit or opening (106, 108) to enable entry of the member (6, 30), the acoustic sealing means (102, 104; 118) being temporarily openable to receive the member (6, 30) from the opened-out slit or opening (106, 108), the acoustic sealing means (102, 104; 118) thereafter closing around the surface of the member (6, 30).

26. An arrangement according to claim 26, characterised in that the acoustic sealing means comprises a bellows (102, 104) extending transversely to the plane of the screen (100), the slit or opening (106, 108) intersecting with a cut (110, 112) through the wall of the bellows (102, 104), the cut (110, 112) extending longitudinally of the bellows (102, 104) to enable the bellows (102, 104) to be temporarily opened out to receive the member (6, 30), the material of the bellows (102, 104) thereafter resiling to embrace the surface of the member (6, 30) when the screen (100) is mounted in the said position.

27. An arrangement according to claim 26, characterised in that the bellows (102, 104) is of frusto-conical shape and its larger-sized end is attached to the screen (100).

28. An arrangement according to claim 26 or 27, characterised in that the bellows (102, 104) is integrally moulded with the screen (100).

29. An arrangement according to claim 25, characterised in that the acoustic sealing means comprises a set of flexible members (118) extending part way across the aperture (132) from opposite edges (124, 126) thereof and having free ends at least some of which contact the surface of the member (6, 30) when the material is mounted in the said position.

30. An arrangement according to any one of claims 4, 9, 12, 24 and 29, characterised in that the flexible members (118) are flexible fibres.
